(19) Europäisches Patentamt
European Patent Office
Office européen des brevets

(11) **EP 3 516 107 B1**

(12) **EUROPÄISCHE PATENTSCHRIFT**

(45) Veröffentlichungstag und Bekanntmachung des Hinweises auf die Patenterteilung:
**14.04.2021  Patentblatt 2021/15**

(21) Anmeldenummer: **17784867.8**

(22) Anmeldetag: **25.09.2017**

(51) Int Cl.:
*D06M 15/693* (2006.01)  *D06M 16/00* (2006.01)
*B60C 9/00* (2006.01)  *D02G 3/48* (2006.01)
*D06M 101/36* (2006.01)

(86) Internationale Anmeldenummer:
**PCT/EP2017/074222**

(87) Internationale Veröffentlichungsnummer:
**WO 2018/055159 (29.03.2018 Gazette 2018/13)**

(54) **TEXTILES VERSTÄRKUNGSMATERIAL UND VERFAHREN ZU DESSEN HERSTELLUNG**

TEXTILE REINFORCEMENT AND PRODUCTION PROCESS THEREOF

RENFORT TEXTILE ET PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2016  DE 102016011645**

(43) Veröffentlichungstag der Anmeldung:
**31.07.2019  Patentblatt 2019/31**

(73) Patentinhaber: **Textilcord Steinfort S.A.**
**8452 Steinfort (LU)**

(72) Erfinder:
• **MÜLLER, Bernhard**
**2500 Baden (AT)**
• **HERRERO ACERO, Enrique**
**A-1190 Wien (AT)**
• **VECCHIATO, Sara**
**A-3430 Tulln (AT)**
• **GÜBITZ, Georg**
**8047 Hart (AT)**

(74) Vertreter: **Schwarz & Partner Patentanwälte OG**
**Patentanwälte**
**Wipplingerstraße 30**
**1010 Wien (AT)**

(56) Entgegenhaltungen:
**WO-A2-2005/121438     US-A- 5 026 819**

• **DATABASE WPI Week 200544 Thomson Scientific, London, GB; AN 2005-425981 XP002776544, -& CN 1 583 857 A (UNIV SOUTH CHINA TECHNOLOGY) 23. Februar 2005 (2005-02-23)**
• **DATABASE WPI Week 200382 Thomson Scientific, London, GB; AN 2003-881777 XP002776545, -& JP 2003 128836 A (ASAHI KASEI KK) 8. Mai 2003 (2003-05-08)**
• **YANG LIU ET AL: "Enzyme-Mediated Grafting of AGE to Kevlar Fiber Using Horseradish Peroxidase", ADVANCED MATERIALS RESEARCH, Bd. 430-432, 1. Januar 2012 (2012-01-01), Seiten 233-241, XP055432866, DOI: 10.4028/www.scientific.net/AMR.430-432.233**

## Beschreibung

Die Erfindung betrifft ein textiles Verstärkungsmaterial zur Verstärkung von insbesondere Gummiprodukten, mit wenigstens einer Multifaser, welche Aramidfasern mit Andockstellen in Form von an deren Oberfläche angeordneten Carboxylgruppen für die Ankopplung insbesondere eines Gummimaterials aufweist, sowie Verfahren zur Herstellung selbiger.

Verstärkungsmaterialien mit derartigen Fasern sind bekannt, ebenso wie mit Fasern aus anderen synthetischen Polymeren wie Polyamid 6, oder Polyamid 6.6 oder diverse Polyester, allen voran Polyethylentherephtalat (PET). Derartige Verstärkungsmaterialien, sei es in Struktur eines Geleges, Cords oder eines textilen Flächengebildes, insbesondere Gewebes, werden beispielsweise zur Verstärkung von Fahrzeugreifen eingesetzt, indem auf die Faserstrukturen zunächst im Zuge des Dippens eine Harz-Latex-Matrix aufgebracht wird, die anschließend thermofixiert wird. In dieser "getrockneten" Form wird der gedippte Reifencord oder das Reifencordgewebe in unvulkanisiertem Gummi eingebettet (z.B. Koextrusion oder Calandrieren) und zur Herstellung eines Grünen Reifens, beispielsweise für die Karkasse verwendet. Als Dip wird typischerweise Resorcinol-Formaldehyd-Latex (RFL) herangezogen, üblicherweise in Form einer Emulsion von Latex in einer Lösung aus Resorcinol und Formaldehyd. Dem Fachmann sind aber auch andere Formaldehyde und/oder Resorcinol-freie Diprezepturen aus der Literatur bekannt.

Während andere Faserstrukturen, beispielsweise aus Rayon eine gute Haftung zu dem Dip herstellen, ist diese Haftung bei unaktivierten Polyester und Aramidfasern deutlich schwächer ausgeprägt. Sie werden daher, bevor sie mit dem Standard-RFL-Dip versehen werden, mit einem Zwischenüberzug versehen, indem sie z.B. in ein Pre-Dip-Bad getaucht werden. Ein solcher Pre-Dip kann beispielsweise ein Gemisch aus geblockten Isocyanaten und niedermolekularen Epoxiden enthalten, wie etwa im "Handbook of Rubber Bonding", Bryan Crowther, Rubber Technology Ltd., 2003, S. 246 beschrieben ist. Die Oberfläche des Materials besteht dann nicht mehr aus den Oberflächen der Fasern selbst, sondern aus dem Zwischenüberzug des Materials des Pre-Dips. Es ergeben sich insgesamt deutlich bessere Haftungseigenschaften, und der Pre-Dip hat sich zum industriellen Standard entwickelt, nicht zuletzt, da dieser anderen Ansätzen der Aramidfaseraktivierung wie Plasma- oder Schwefelsäurenbehandlung nicht nur verfahrenstechnisch, sondern auch hinsichtlich kontrollierter gleichmäßiger Oberflächenwirkung deutlich überlegen ist. Solche anderen Behandlungen mit beispielsweise starker Säure oder Lauge sind in CN 1583857 A für die Vorbereitung von Aramidfasern für ein Gummiprodukt beschrieben, wobei währenddessen zusätzlich Ultraschall eingesetzt wird. DE 3485967 T2 beschreibt beispielsweise ein Beschichtungsreagenz (Dip) für modifizierte Aramidfaser zur Verbesserung der Haftungseigenschaften.

Der Erfindung liegt die Aufgabe zugrunde, textile Verstärkungsmaterialien der eingangs genannten Art derart weiterzubilden, dass zum einen der Einsatz auch unter hohen mechanischen Anforderungen, wie etwa für Reifencord-Anwendungen, gewährleistet ist, und die sich zudem mit einer einfachen und vergleichsweise universal anwendbaren Technik herstellen lassen.

Diese Aufgabe wird gelöst durch ein textiles Verstärkungsmaterial der eingangs genannten Art, welches durch eine Flächendichte der Andockstellen von wenigstens 0,2 nmol/mm$^2$ bei einer Festigkeit (tensile strength) der Multifaser von wenigstens 600 MPa gekennzeichnet ist.

Es wurde von den Erfindern gefunden, dass Aramidfasern gekennzeichnet durch eine Flächendichte der Andockstellen von wenigstens 0,2 nmol/mm$^2$ in einem erfindungsgemäßen Verfahren unter Einsatz von Oxydoreduktasen bereitgestellt werden können, ohne dabei die mechanischen Eigenschaften wie eben die Festigkeit einzubüßen.

Der Einsatz von Enzymen für die Modifikation von textilen Fasern wird beispielsweise in WO 2005/121438 A2 für Polyamide mit dem Ziel Färbungseigenschaften zu verbessern beschrieben. Die dort untersuchten nicht-aromatischen Amidfasern (Nylon) konnten mit Proteasen modifiziert werden. Die Erfinder der vorliegenden Anmeldung haben festgestellt, dass eine Übertragbarkeit des in WO 2005/121438 A2 beschriebenen Konzepts der Modifikation auf Aramide nicht gegeben ist (s. Vergleichsbeispiele; Tabelle 1a).

Hingegen konnte nun überraschenderweise mit Oxydoreduktasen, z.B. Laccasen, gezielt eine Erhöhung der Andockstellen erreicht werden. Laccasen sind im Zusammenhang mit Modifikation von Polymereigenschaften zum Beispiel auch in WO 2010/0116041 beschrieben und auch in WO 2005/121438 A2 erwähnt. Laccasen wurden in JP 2003/128836 A zum Abbau von Polyamidfilmen beschrieben. Im Zusammenhang mit Aramiden ist der Einsatz von Laccasen noch nicht offenbart.

Die erfindungsgemäßen Faserstrukturen zeichnen sich somit dadurch aus, dass die Flächendichte der Andockstellen erheblich höher ist als die standardmäßig bei kommerziell erhältlichen Aramidfasern bestehende Flächendichte (im Bereich 0,11 nmol/mm$^2$), wobei zugleich die strukturelle Integrität der Aramidfasern dem Vergleich mit Standard-Aramidfasern standhält und somit auch die mechanischen Eigenschaften wie eben die Festigkeit.

Die Andockstellen beziehen sich dabei auf die unmittelbar zugängliche Faseroberfläche der Aramidfaser, d.h. nicht auf einen an ihrer Oberfläche aufgebrachten Überzug, etwa durch einen Pre-Dip. Die Flächendichte bezieht sich dabei auf den auf die Aramidfasern entfallenden Oberflächenanteil des Verstärkungsmaterials. Das heißt, würde das Verstärkungsmaterial wie in einer möglichen Ausführungsform aus Aramidfasern bestehen, wäre die ankoppelnde Oberfläche der Bezug, bei z.B. Hybriden der entsprechende Oberflächenanteil der Aramidfasern.

Durch die erfindungsgemäß hohe Flächendichte der Andockstellen wird die Haftung der Faserstruktur z.B. an eine Harz-Latex-Matrix oder Gummimatrix signifikant verbessert und dadurch der Vorteil erreicht, dass auf den Pre-Dip verzichtet werden kann, wenn beispielsweise Reifencord hergestellt wird.

Besonders bevorzugt beträgt die Flächendichte der Andockstellen wenigstens 0,4 nmol/mm$^2$, insbesondere wenigstens 0,6 nmol/mm$^2$. Dies erhöht nochmals die Haftungsfreudigkeit der Aramidfasern bzw. der Struktur, in der sie das textile Verstärkungsmaterial bilden.

In einer weiteren bevorzugten Ausführungsform beträgt die Flächendichte der Andockstellen höchstens 2,4 nmol/mm$^2$, insbesondere höchstens 2,0 nmol/mm$^2$, sogar höchstens 1,6 nmol/mm$^2$.

Dadurch bleibt eine strukturelle Integrität der Fasern sichergestellt. So könnten zwar radikale chemische Behandlungen der Aramidfaser-Oberflächen möglicherweise durch radikale Kettenzerstörung der aromatischen Polyamidketten eine sehr hohe Anzahl von Kettenenden schaffen, allerdings mit degenerativer Wirkung bis in die tieferen Schichten der Fasern und somit festigkeitszerstörend.

Diese Festigkeit ist bei den Fasern des erfindungsgemäßen Verstärkungsmaterials erhalten und beträgt sogar bevorzugt wenigstens 800 MPa, weiter bevorzugt wenigstens 1000 MPa, insbesondere wenigstens 1200 MPa. Es können jedoch, insbesondere wenn die Multifaser überwiegend oder vollständig aus Aramidfasern besteht, auch höhere Werte erreicht werden wie 1800 MPa oder mehr, bis hin zu 3000 MPa oder mehr. Als Aramidfasern können hierzu auch kommerziell erhältliche Garne dienen, wie z.B. Kevlar® oder Twaron®. Die Festigkeitswerte beziehen sich auf den konditionierten Zustand gemäß ASTM D885-85.

In einer bevorzugten Ausführungsform beträgt die Wassertropfen-Aufsaugzeit, bestimmbar beispielsweise im WCA-Test, weniger als 1,6 Sekunden, insbesondere weniger als 1,2 Sekunden, sogar weniger als 0,8 Sekunden. Wie weiter unten noch erläutert wird, kann die Aufsaugzeit dabei so gering sein, dass sogar die eigentlich mit dem WCA-Test angestrebte Winkelmessung nicht mehr sinnvoll möglich ist.

Bevorzugt sind ein Teil der Andockstellen gebildet aus aufgebrochenen vormaligen Amidbindungen der Fasern.

In einer besonders bevorzugten Ausführungsform ist ein überwiegender Teil der Andockstellen durch eine Oberflächenbehandlung der Faserstruktur mit einem unter Wirkung einer Oxydoreduktase, insbesondere einer Laccase (EC 1.10.3.2), erfolgten Aufbrechen oberflächennaher Amidbindungen der Amidfasern generiert. Diese Generierung stellt eine schonende Generierung dar, mit der ein degeneratives Zersetzen der Fasern in faseroberflächenfernen Bereichen vermieden und die strukturelle Integrität der Fasern allenfalls unmerklich beeinträchtigt wird. Beispielsweise stellen die Kupferkerne der Laccase in ihrem oxidierenden Zyklus die Elektronenakzeptorseite dar. Als weitere Variante kämen auch Peroxidasen als Oxydoreduktase in Betracht.

In diesem Zusammenhang ist bevorzugt ein Trennmechanismus zum Aufbrechen der Amidbindungen vorgesehen, der zyklisch zwischen wenigstens zwei unterschiedlichen eingenommenen Zuständen wechselnde Aufbrecher aufweist, wobei diese zyklische Zustandsänderung in einem Teilzyklus von der Oxydoreduktase angetrieben wird, und die Aufbrecher in einem anderen Teilzyklus jeweils nahe einer Amidbindung und/oder eines $C_6$-Ringes (aromatisches Segment) energieübertragend mit den Aramidfasern wechselwirken. Die Aramidfaser wird dabei oxidiert, wobei wenigstens ein Teil der Andockstellen aus den so aufgebrochenen Amidbindungen generiert ist. Auf diese Weise ist die Oberflächendichte der Andockstellen besonders effektiv bereitgestellt, die Aufbrecher wirken in einer bildhaften Beschreibung als "Shuttles" (oder Mediator zwischen der Faserstruktur und der Laccase), um zyklisch Energie aufzunehmen und lokal an den aufzubrechenden Bindungen abzugeben bzw. als Mediator für den mit der Oxidation der Aramide einhergehenden Elektronentransfer.

In einer besonders bevorzugten Ausgestaltung beinhaltet das Verstärkungsmaterial eine Gummimatrix, in die eine die Aramidfasern enthaltende Faserstruktur eingebettet ist. Dabei kann das so beschichtete Verstärkungsmaterial insbesondere Reifencord oder ein Reifencord-Gewebe sein, und die Beschichtung/Gummimatrix kann beispielsweise über den oben erläuterten RFL-Dip hervorgehen. Es ist jedoch auch allgemeiner an ein Verstärkungsmaterial in Form eines Komposits gedacht, dessen Matrix an diese Ankopplungsstellen der soweit oben beschriebenen textilen Struktur mit der Aramidfasern aufweisenden Multifaser anbindet. Die textile Struktur kann im Rahmen der Erfindung eine oder mehrere gezwirnte oder ungezwirnte Multifasern aufweisen, als Cord (Single-End-Cord), oder auch als Gelege, Gewebe, Gestricke oder Gewirke vorliegen.

Besonders bevorzugt hat ein derart beschichtetes Verstärkungsmaterial, insbesondere Reifencord oder eine flächige Reifencordkonstruktion, etwa ein Reifencord-Gewebe, ein gemäß ASTM D4393 bestimmten Pull von wenigstens 92 N/cm, insbesondere wenigstens 96 N/cm, sogar wenigstens 100 N/cm.

Die Faserstruktur des textilen Verstärkungsmaterials könnte durchaus ausschließlich aus Aramidfasern gebildet sein, ist jedoch keineswegs darauf eingeschränkt. So könnten auch Faserbestandteile aus Nicht-Aramidfasern wie z.B. Polyamid 66 oder andere synthetische Faserbestandteile, etwa Polyester oder Rayon, enthalten sein. Konkret wird insbesondere eine Hybridstruktur, Aramid-Nylon, als vorteilhaft angesehen.

Das erfindungsgemäße Verstärkungsmaterial ist vielfältig einsetzbar, um insbesondere Gummiprodukte oder Gummimaterialien aufweisende Produkte zu verstärken, insbesondere wird an die Armierung von Gummiprodukten wie etwa Karkassen- und Gürtelbandagenmaterial für Reifen, insbesondere Fahrzeugreifen gedacht, aber auch an beispielsweise Förderbänder oder Schläuche. Diese Verwendungen sind ebenso unter Schutz gestellt wie entsprechend verstärkte Gummiprodukte selbst, insbesondere Reifen.

In verfahrenstechnischer Hinsicht wird bereitgestellt ein Verfahren zur Vorbereitung einer Fasern enthaltenden Struktur für deren Ankopplung an insbesondere eine Gummimatrix, wobei die Fasern lineare Anordnungen mit wenigstens zum Teil aromatischen Segmenten aufweisen, die jeweils über Amidbindungen miteinander verbunden sind, das im Wesentlichen dadurch gekennzeichnet ist, dass Amidbindungen an der Oberfläche der Fasern durch einen eine Oxydoreduktase, insbesondere Laccase aufweisenden Trennmechanismus aufgebrochen werden und dass aus den so aufgebrochenen Amidbindungen Andockstellen für die Ankopplung insbesondere der Gummimatrix gebildet werden.

Der besondere Vorteil des erfindungsgemäßen Verfahrens liegt in der sanften Wirkung des Trennmechanismus, so werden faseroberflächennahe Amidbindungen in schonender Weise primär völlig auf die Faseroberflächen beschränkt aufgebrochen, so dass die dabei entstehenden freien Enden Andockstellen für die Ankopplung etwa der Gummimatrix bilden. Der Faserhauptkörper bleibt davon de facto unberührt, wobei sich hier als Beurteilungsmaßstab den Augenschein rasterelektronisch mikroskopischer Aufnahmen heranziehen lässt. Entsprechend werden die guten mechanischen Eigenschaften, insbesondere Festigkeitseigenschaften der Fasern beibehalten und nicht einer besseren Haftungsfreudigkeit geopfert.

Bevorzugt weist der Trennmechanismus zyklisch zwischen wenigstens zwei unterschiedlichen eingenommenen Zuständen wechselnde Aufbrecher auf, wobei diese zyklische Zustandsänderung in einem Teilzyklus von der Oxydoreduktase angetrieben wird und wobei die Aufbrecher in einem anderen Teilzyklus jeweils nahe einer Amidbindung und/oder eines $C_6$-Ringes energieübertragend mit der Faser wechselwirken. Mit dieser Weiterbildung wird der Trennmechanismus noch weitergehend verbessert und ist gezielter steuerbar.

Bevorzugt beinhalten die Aufbrecher in wenigstens einem ihrer zyklisch eingenommenen Zustände Nitroxylradikale und/oder Oxo-Ammonium-Ionen.

In einer besonders bevorzugten Ausführungsform sind die Aufbrecher aus einem oder mehreren der in der Gruppe HBT (1-Hydroxybenzotriazol), VLA (Violursäure) und TEMPO (2,2,6,6-Tetramethylpiperidinyloxyl) enthaltenen Substanzen gebildet. Diese Substanzen erweisen sich besonders geeignet, einerseits aufbrechend zu wirken und andererseits in Reaktion mit der Oxydoreduktase ihren Zustand wiederzuerlangen, in dem sie aufbrechend wirken können. Die Wirkungsweise ist ein Wasserstoffatom-Transfer (HBT, VLA) oder ein ionischer Oxidationsmechanismus (TEMPO). Ebenfalls könnten für die Aufbrecher Substanzen wie N-Hydroxyacetanilid (NHA) oder N-Hydroxyphtalamid (HPI) eingesetzt werden.

Wie oben bereits erläutert, ist eine Aufrechterhaltung einer insbesondere möglichst gleichmäßigen strukturellen Integrität der Faserkörper von Bedeutung. Insbesondere ist im Rahmen der sanften Behandlung einer übermäßigen Strukturschwächung der Faserstruktur entgegenzuwirken. Ein Einsatz von Proteasen hat sich diesbezüglich als eher weniger geeignet herausgestellt. Es wird daher bevorzugt, dass das Aufbrechen in Abwesenheit von Proteasen erfolgt.

In einer zweckmäßigen Gestaltung erfolgt das Aufbrechen in wässriger Lösung. Bei dem Vorgang der Bildung der Andockstellen ist somit $H_2O$ vorhanden, das zur Bildung der Andockstellen beitragen kann und in entsprechender Menge bei dem Verfahren verbraucht wird.

Es werden somit geeignet erhalten Fasern enthaltende Strukturen, wobei die Fasern lineare Anordnungen mit wenigstens zum Teil aromatischen Segmenten aufweisen, die jeweils über Amidbindungen miteinander verbunden sind, mit den über das Verfahren erzeugten zusätzlichen Ankopplungsstellen für die Ankopplung der Struktur an ein anzukoppelndes Material, insbesondere eine Gummimatrix. Diese könnte sich wiederum über den RFL-Dip ergeben.

Weitere Einzelheiten, Merkmale und Vorteile der Erfindung ergeben sich aus der nachfolgenden Beschreibung mit Bezug auf die beigefügten Figuren.

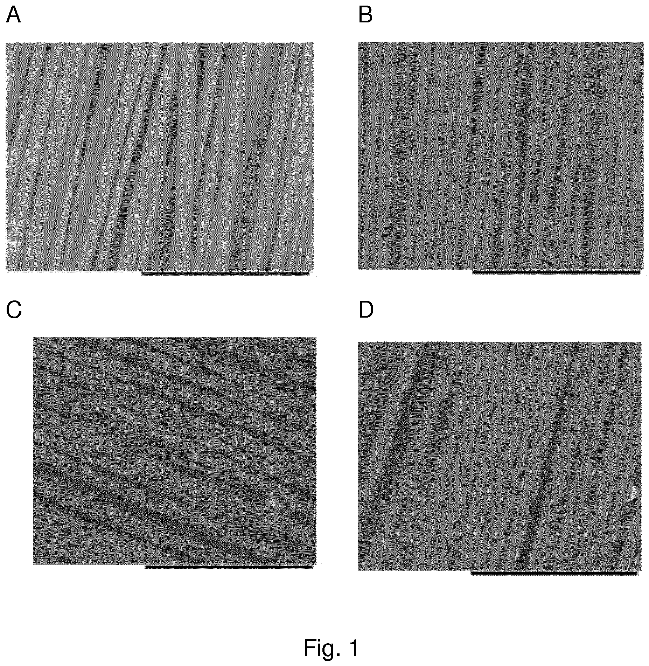

Die Figur 1 zeigt rastermikroskopische Aufnahmen von unbehandelten (Fig. A) bzw. verschieden behandelten Faserstrukturen (Fig. B, C, D), wobei der Maßstabsbalken jeweils 100 μm darstellt und die behandelten Faserstrukturen mit *Th*L Laccase und dem Aufbrecher HBT (Fig. B), TEMPO (Fig. C) bzw. VLA (Fig. D) behandelt wurden, wie unten beschrieben.

Zunächst wird die Wirksamkeit der Erfindung hinsichtlich der Bereitstellung einer erhöhten Menge an Carboxylgruppen an der Oberfläche einer Faserstruktur eines Verstärkungsmaterials erläutert. Als Vergleichsbeispiel wurden die Fasern auch mit der Cysteinprotease Papain inkubiert, welche in WO 2005/121438 als geeignet für die Bereitstellung erhöhter Mengen an Carboxylgruppen an nicht-aromatischen Polyamidfasern beschrieben wurde.

Für die Versuche wurden Probestücke aus Aramidgeweben in 20 mm x 20 mm große Stücke geschnitten, um als Testkörper zu dienen. Als Aramidgarn für dieses Gewebe wurde Aramid Twaron T1014 Garn herangezogen. Vor der Inkubation zur Oberflächenbehandlung der Faserstruktur wurde zur Entfernung möglicher Oberflächen-Verunreinigungen ein Waschprozess vorgenommen, in einem ersten Schritt mit Triton X-100 (5 gL$^{-1}$), in einem zweiten Schritt mit einer 100 mM (Millimol pro Liter) $Na_2CO_3$-Lösung und anschließend mit doppelt destilliertem Wasser (dd$H_2O$). Diese Schritte wurden für 30 Minuten bei 50°C und 130 rpm ausgeführt und nach Lufttrocknung die Proben in eine Pufferlösung gegeben (100 mM Succinat).

Für eine Null-Referenz wurde zunächst die Flächendichte der Carboxylgruppen einer ansonsten unbehandelten Testkörper-Faserstruktur mittels der Toluidine Blue O (TBO) Methode (siehe S. Roediger et al Anal. Chem. vol. 83, pp. 3379-3385, 2011) ermittelt. Dazu wurde ca. 1 g der zu untersuchenden Probe in einer 0,1% TBO-Lösung in Tris/HCL-Puffer (100 mM, pH 8,6) für 15 Minuten bei 50°C und 130 rpm (8 ml) inkubiert, aus der TBO-Lösung herausgenommen und mit Tris/HCL (100 mM, pH 8,6) so lange gewaschen, bis die Waschlösung klar war. Die TBO enthaltende Probe wurde mit 20% SDS für 30 Minuten bei 50°C und 130 rpm gerührt, um das an den Carboxylen anhaftende TBO freizusetzen. Von diesen wurde die Extinktion bei 625 mM und 23°C gemessen (spektrophotometrisch mit TECAN Infinite M200PRO).

Der die Flächendichte der Andockstellen abbildende Grad der Carboxylierung (DoC) in nmol/mm$^2$ wurde dann gemäß der folgenden Formel berechnet:

$$DoC = (A \cdot V)/(As \cdot d \cdot \varepsilon),$$

mit

A: Absorption bei 625 mM;
V: Volumen der Desorptionslösung [L];
$A_s$: Oberfläche [mm$^{-2}$], (im Falle von Corden ist die Fläche des den Cord umschreibenden Drehzylinders mit dem Durchmesser des Cords heranzuziehen),
d: Lichtweg (cm);
$\varepsilon$: Extinktionskoeffizient von TBO (=54800 L mol$^{-1}$cm$^{-1}$),
DoC: Grad der Carboxylierung [nmol/mm$^2$].

Wie oben bereits erläutert, ist für $A_s$ der Flächenanteil des Materials einzusetzen, der auf den Aramidanteil der Oberfläche zurückzuführen ist, z.B. bei einem Cord aus 75% Polyester und 25% aromatischem Polyamid bei vorher gemeinsam verwirbelten Einzelfasern ein Anteil von 25%.

Im Ergebnis wurde für die Null-Referenz ein Wert von 0,11 nmol/mm$^2$ erhalten.

Für die Vergleichsbeispiele wurde Papain (*Carica papaya*) in verschiedenen Konzentrationen eingesetzt, wobei die Proteaseaktivität mit 3,1 U/mg angegeben war. Die Pufferlösung bestand für die Vergleichsbeispiele aus einem Phosphatpuffer (50mM Natriumphosphat, pH 6-7) mit EDTA (1mM) und L-Cystein (5mM) zur Stabilisierung des Papains. Die Faserstruktur wurde für 24 Stunden inkubiert (Temperatur 30 °C bzw. 50 °C, 130 rpm). Nach der Inkubation wurde ein erneuter Waschvorgang wie oben bereits beschrieben vorgenommen.

Die Ergebnisse hinsichtlich des Grads der Carboxylierung sind für die Vergleichsbeispiele in Tabelle 1a dargestellt.

| Probe | DoC (nmol/mm$^2$), TBO-Methode |
| --- | --- |
| Null-Referenz | 0,11 |
| Vergleichsbeispiel 1 Inkubation bei 30 °C ohne Papain | 0,08 |
| Vergleichsbeispiel 2 Inkubation bei 30 °C mit Papain 180 U/mg | 0,07 |
| Vergleichsbeispiel 3 | 0,07 |
| Inkubation bei 30 °C mit Papain 40 U/mg | |
| Vergleichsbeispiel 4 Inkubation bei 50 °C ohne Papain | 0,08 |
| Vergleichsbeispiel 5 Inkubation bei 50 °C mit Papain 180 U/mg | 0,08 |
| Vergleichsbeispiel 6 Inkubation bei 50 °C mit Papain 40 U/mg | 0,08 |
| Vergleichsbeispiel 7 Inkubation bei 50 °C ohne Papain | 0,12 |
| Vergleichsbeispiel 8 Inkubation bei 50 °C mit Papain 6 U/mg | 0,11 |
| Vergleichsbeispiel 9 Inkubation bei 50 °C mit Papain 0.06 U/mg | 0,11 |

Es ist ersichtlich, dass keine Erhöhung der Carboxylgruppendichte an den Aramidfasern erreicht wird, unabhängig von der Menge der eingesetzten Papainkonzentrationen oder der Inkubationstemperatur. Die Beobachtung bestätigt, dass die in WO 2005/121438 offenbarte Methode mit aromatischen Polyamiden nicht ausführbar ist. Ohne sich auf diese Theorie beschränken zu wollen, wird vermutet, dass Proteasen, deren ursprüngliche katalytische Aktivität sich auf die Spaltung von Amidbindungen in Peptiden oder Proteinen gerichtet ist, nicht in der Lage sind, die Amidstrukturen der Aramide anzugreifen, da die Amidbindung mit den benachbarten Aromaten ein konjugiertes System bildet, während in biogenen Peptiden oder Proteinen die Amidbindung immer von aliphatischen Abschnitten benachbart ist. Weiters könnte es eine Rolle spielen, dass Proteasen eine ungleiche Wirkung auf stark und weniger stark kristalline Bereiche ausüben.

Als erstes erfindungsgemäßes Beispiel wurde 10 mM Laccase (*Th*L, d.h. *Trametes hirsuta,* Bereitstellung z.B. wie in E. Almansa et al in "Biocatalytics and Biotransformation", vol. 22, No. 5-6, pp. 315-324, Jan. 2004, beschrieben) zu der Pufferlösung zugegeben, und die Faserstruktur in dieser Pufferlösung für 24 Stunden inkubiert. (Temperatur 25°C; pH im Bereich zwischen 3,5 und 3,7). Nach der Inkubation wurde ein erneuter Waschvorgang wie oben bereits beschrieben vorgenommen, wonach keine Laccase mehr auf der Oberfläche nachweisbar war. Für dieses Beispiel ergab sich ein Grad an Carboxylierung von 0,45 nmol/mm$^2$, also bereits eine Steigerung der Flächendichte der Carboxylgruppen. Eine geeignete alternative Laccase wäre etwa Laccase aus *Myceliophtora thermophila,* erhältlich von dem Hersteller Novozyme, DK.

In einem zweiten erfindungsgemäßen Beispiel wurde vor der Zugabe der Laccase *Th*L noch 1-HBT (20 mM) zugegeben, die Inkubationszeit und nachfolgender Waschvorgang erfolgte wie in Beispiel 1.

Für dieses Beispiel wurde ein Grad an Carboxylierung von 0,91 nmol/mm$^2$ festgestellt. HBT wirkt somit als zusätzliches Aufbrecher-Molekül, welches in wässriger Lösung Bindungen der einzelnen Ketten der Aramidfasern an der Oberfläche aufbricht und für eine weitere Erhöhung der Flächendichte der Carboxylgruppen sorgt, die (siehe Beispiel 1) ohne zusätzliche Aufbrecher nicht erreichbar ist.

In einem dritten Ausführungsbeispiel wurde vorgegangen wie im zweiten Beispiel, jedoch mit TEMPO als Aufbrecher, ebenfalls mit 20 mM, als Aufbrecher-Molekül. Hier wurde ein Grad an Carboxylierung von 0,80 nmol/mm$^2$ erreicht.

Die Ergebnisse der Beispiele 1, 2 und 3 sowie die Null-Referenz sind in der nachstehenden Tabelle 1b nochmals zusammengefasst.

Tabelle 1b:

| Probe | DoC (nmol/mm$^2$), TBO-Methode |
|---|---|
| Null-Referenz | 0,11 |
| Beispiel 1 | 0,45 |
| Beispiel 2 | 0,91 |
| Beispiel 3 | 0,80 |

Eine weitere Messreihe bestätigte diese Ergebnisse, wobei als Beispiel 4 auch noch VLA (40 mM) als Aufbrecher getestet wurde, die Ergebnisse sind in Tabelle 1c dargestellt.

Tabelle 1c:

| Probe | DoC (nmol/mm$^2$), TBO-Methode |
|---|---|
| Null-Referenz | 0,11 |
| Beispiel 1 | 0,45 |
| Beispiel 2 | 0,91 |
| Beispiel 3 | 0,74 |
| Beispiel 4 | 0,54 |

Ein weiterer experimenteller Beleg für die Schaffung zusätzlicher hydrophilischer funktionaler Gruppen an der Oberfläche ergab sich daraus, dass für die Null-Referenz bei der Messung des Wasserkontaktwinkels (WCA, mit Drop Shape Analysis System DSA 100 (Kruss GmbH, DE), Testflüssigkeit ddH$_2$O mit einer Tropfengröße von 5 $\mu$l und einer Dosiergeschwindigkeit von 60 U min$^{-1}$) eine Wassertropfen-Aufsaugzeit von 2 Sekunden feststellbar war, wohingegen zu den Beispielen 2 und 3 die Wassertropfen-Aufsaugzeit derart geringer war (praktisch unmittelbares, sehr schnelles Aufsaugen), dass eine Bestimmung des Wasserkontaktwinkels gemäß dem üblichen Standardverfahren gar nicht mehr möglich war.

Des Weiteren wurden Proben der Null-Referenz und der Beispiele 2, 3 und 4 auch rasterelektronenmikroskopisch (Renishaw InVia Raman microscope mit Anregungslasern) untersucht, um festzustellen, ob sich durch die Oberflächenbehandlung eine strukturelle Schwächung der Einzelaramidfasern erkennen lässt. Dies ist nicht der Fall, wie sich aus den REM-Aufnahmen der Figur 1 ergibt. So zeigt Fig. 1a die REM-Aufnahme der Null-Referenz, und Fig. 1b, Fig. 1c bzw. Fig. 1d eine REM-Aufnahme zu den Beispielen 2, 3 bzw. 4.

Da die strukturelle Integrität der Fasern durch die vorgenommene Oberflächenbehandlung nicht beeinträchtigt ist, ist davon auszugehen, dass auch die mechanischen Eigenschaften erhalten bleiben, so dass sich das Verstärkungsmaterial auch zur Bildung von beispielsweise Reifencord eignet, an den erhebliche mechanische Ansprüche gestellt werden.

Im Folgenden wird der Mechanismus zur Erhöhung der Flächendichte der Carboxylgruppen nochmals weiter unter Referenz auf eine Sauerstoff-Verbrauchsmessung erläutert. Dazu wurde ein faseroptischer Sauerstoff-Sensor (Pyroscience, Aachen, Germany) herangezogen. In Anwesenheit von Sauerstoff wird eine Lumineszenz eines Indikator-Farbstoffs (hier bei 760-790 nm) durch einen Energietransfer unterdrückt, wobei die Überschussenergie auf die Sauerstoff-Moleküle übertragen wird. Das Maß an Unterdrückung entspricht dabei der Sauerstoff-Konzentration in der Probe. Da ein bei der Messung festgestellter Sauerstoff-Verbrauch ein Anzeichen dafür darstellt, dass an den Aramidfaser-Oberflächen Oxidationsvorgänge eingeleitet wurden, lässt sich mit diesem Verfahren eine auf einem Oxidationsvorgang beruhende Einwirkung feststellen.

So sinkt das Sauerstoff-Niveau für eine zu dem Beispiel 2 gehörige Probe (Puffer 100 mM, *Th*L 10 mM, HBT 20 mM, Aramidfaserstruktur (70 mg) im zeitlichen Verlauf zunächst stark ab, sobald die Laccase THL zugegeben wurde, und zwar deutlich stärker als bei einem Leervergleich (Beispiel 2, aber ohne Aramidfaserstruktur-Substrat). Innerhalb der ersten drei Stunden wird ein maximaler Sauerstoff-Verbrauch registriert, nach etwa 8 Stunden verringert sich der Sauerstoff-Verbrauch bezüglich der Leer-Referenz. Eine weitere Vergleichsreferenz, bei der gegenüber Beispiel 2 neben dem Puffer und dem Aramidfaserstruktur-Substrat nur die Aufbrecher (HBT), nicht aber die Laccase (THL) enthalten ist, lässt kein Absinken des Sauerstoff-Niveaus erkennen. Bei einer dritten Referenz, bei der im Vergleich zu Beispiel 2 neben dem Puffer und dem Aramidfaserstruktur-Substrat die Aufbrecher (HBT) nicht enthalten waren, die Laccase (THL) allerdings schon, war dagegen im Vergleich zu Beispiel 2 ein deutlich geringerer Abfall im Sauerstoff-Niveau festzustellen, der sich auch viel rascher wieder erholt hat.

Aus diesem Ergebnis lässt sich schließen, dass eine relevante Oxidationswirkung auf das Aramidfaser-Substrat von den Aufbrecher-Molekülen (z.B. HBT) bewirkt wird, die dabei einen anderen chemischen Oxidationszustand annehmen und dadurch alleine für weitere Aufbrechwirkungen nicht mehr verfügbar sind, während die Laccase (z.B. THL) alleine Aufbrech-Mechanismen in diesem Umfang nicht bewirken kann. Die oxidative Wirkung der Laccase richtet sich auf die Aufbrecher-Moleküle und bringt diese in Vervollständigung einer zyklischen Zustandsbewegungsänderung wieder in den Zustand zurück, in dem sie weitere Aufbrechwirkung für das Aramidfaser-Substrat bewirken können. Demnach stellt die Laccase einen Antrieb für die zyklische Änderung der Zustände der Aufbrecher dar. Die Aufbrecher-Moleküle wirken als Mediatoren der oxidativen Wirkung.

In ähnlicher Weise wurden vergleichende Sauerstoff-Messungen für ein anderes Beispiel mit VLA als Aufbrecher anstelle von HBT als Aufbrecher durchgeführt. Auch hier konnte festgestellt werden, dass bei der Leer-Referenz zwar ein Sauerstoff-Verbrauch feststellbar war, bedingt durch die Oxidation der Aufbrecher durch die Laccase, während dagegen in Anwesenheit des Aramidfaserstruktur-Substrats die oxidative Reaktion an den Faseroberflächen fortgesetzt wurde. Demnach erweist sich auch VLA als durchaus geeigneter Kandidat für die Aufbrechwirkung.

Des Weiteren wurden noch Leistungstests nach ASTM D4393 durchgeführt. Ausgangspunkt dieser Leistungstests war ein Aramidcord mit 1670/2 dtex, Twist 350TPM. Nach Waschvorgängen wie oben angegeben (mit Ausnahme der TritonX-100 Behandlung) wurde die enzymatische Behandlung wieder in mehreren Varianten bei einem Succinat-Puffer 100 mM ausgeführt. Die weiteren Konzentrationen für die herangezogene Laccase war 10 mM (*Th*L), und für die Aufbrecher 20 mM jeweils für HBT, TEMPO und VLA. Insgesamt wurden bei 600 ml Inkubationslösung 60 ml Laccase dosiert und 120 ml von 100 mM Aufbrecherlösung. Die Faserstruktur-Parameter waren ca. 20 m, Oberfläche 390 cm$^2$ (geschätzt) bei einem Gewicht von 7 bis 9 g.

Diese Proben wurden einer Standard-RFL-Dip Prozedur unterzogen, und mit den so gedippten Aramidcord-Proben Prüfungen nach ASTM D4393 durchgeführt. Eine weitere Vergleichsreferenz wurde erstellt ohne die erfindungsgemäße Oberflächenbehandlung, aber mit dem Standard-Pre-Dip vor dem eigentlichen RFL-Dip. Eine Null-Referenz wurde ebenfalls gebildet, indem nur die Pufferlösung, jedoch weder Laccase noch Aufbrecher beigegeben wurden. Weiters wurde für die gedippten Aramidcord-Proben die Bruchfestigkeit gemäß ASTM D885-85 bestimmt, wobei zu beachten ist, dass für die Bruchfestigkeitswerte Messschwankungen im Bereich von 13 bis 20 N beobachtet wurden.

In der nachstehenden Tabelle 2 sind die Messergebnisse für Pull in N/cm angegeben, nach 24 Stunden Konditionierung. Außerdem gibt die Tabelle Bruchfestigkeitswerte für die gedippten Aramidcord-Proben wieder.

Tabelle 2:

| Probe | Pull (N/cm) (ASTM D4393) | Bruchfestigkeit (N) (ASTM D885-85) |
|---|---|---|
| Null-Referenz | 91,5 | 490,0 |
| HBT | 96,6 | 505,7 |
| TEMPO | 107,0 | 491,3 |
| VLA | 100,5 | 493,0 |

Es sind somit signifikant verbesserte Pull-Eigenschaften für alle drei Typen der herangezogenen Aufbrecher festzustellen, für TEMPO und VLA liegen diese zudem auch noch signifikant höher als in einer Vergleichsmessung mit dem bislang industriell eingesetzten Pre-Dip (Vergleichsergebnis hier 98.1 N/cm).

Die Bruchfestigkeitswerte der gedippten Cords mit erfindungsgemäß modifizierten Aramidfasern liegen im gleichen Bereich wie die Werte, die für die Null-Referenz erhalten werden, bzw. höher. Es ist also gezeigt, dass die mechanischen Eigenschaften des zu Grunde liegenden Verstärkungsmaterials - wie schon die optische Untersuchung andeutet - durch die vorgenommene Oberflächenbehandlung nicht beeinträchtigt werden. Diese Ergebnisse erlauben außerdem den Rückschluss auf die Festigkeitswerte der erfindungsgemäßen Verstärkungsmaterialien. Um vergleichbare Bruchfestigkeiten für die gedippten Cords zu erreichen, müssen die Festigkeitswerte der erfindungsgemäßen Verstärkungsmaterialien (tensile strength) zumindest im Bereich der nicht-modifizierten Aramidfasern liegen, d.h. wenigstens 600 MPa.

Auch in der Coverage sind, wenn auch etwas weniger ausgeprägt, Verbesserungen erkennbar, hier werden die besten Werte mit dem Aufbrecher VLA erzielt, nämlich ca. 15% relative Verbesserung zur Null-Referenz.

Der Dip-Pick-up lag für sämtliche Beispiele zwischen 8 und 9% und somit im akzeptablen Niveau, nur geringfügig höher als die Vergleichsreferenz mit industriellem Pre-Dip.

Die Erfindung ist nicht auf die in der obigen Beschreibung und die darin offenbarten Beispiele eingeschränkt. Vielmehr können die Merkmale der nachstehenden Ansprüche sowie die der vorangegangenen Beschreibung einzeln und in Kombination für die Verwirklichung der Erfindung in ihren verschiedenen Ausführungsformen wesentlich sein.

**Patentansprüche**

1.  Textiles Verstärkungsmaterial zur Verstärkung von insbesondere Gummiprodukten, mit wenigstens einer Multifaser, welche Aramidfasern mit Andockstellen in Form von an deren Oberfläche angeordneten Carboxylgruppen für die Ankopplung insbesondere eines Gummimaterials aufweist,
    **gekennzeichnet durch** eine Flächendichte der Andockstellen von wenigstens 0,2 nmol/mm$^2$ bei einer Festigkeit der Multifaser von wenigstens 600 MPa, wie in der Beschreibung definiert.

2.  Verstärkungsmaterial nach Anspruch 1, **dadurch gekennzeichnet, dass** die Flächendichte der Andockstellen wenigstens 0,4 nmol/mm$^2$, insbesondere wenigstens 0,6 nmol/mm$^2$ beträgt.

3.  Verstärkungsmaterial nach Anspruch 1 oder 2, **dadurch gekennzeichnet, dass** die Flächendichte der Andockstellen höchstens 2,4 nmol/mm$^2$, insbesondere höchstens 2,0 nmol/mm$^2$, sogar höchstens 1,6 nmol/mm$^2$ beträgt.

4.  Verstärkungsmaterial nach einem der vorhergehenden Ansprüche, **dadurch gekennzeichnet, dass** die Festigkeit der Aramidfasern wenigstens 800 MPa, bevorzugt wenigstens 1000 MPa, inbesondere wenigstens 1200 MPa beträgt.

5.  Verstärkungsmaterial nach einem der vorhergehenden Ansprüche, mit einer Wassertropfen-Aufsaugzeit, bestimmt gemäß dem WCA-Test, von weniger als 1,6 s, insbesondere weniger als 1,2 s, sogar weniger als 0,8 s.

6.  Textiles Verstärkungsmaterial nach einem der vorhergehenden Ansprüche, bei dem ein insbesondere überwiegender Teil der Andockstellen durch eine Oberflächenbehandlung mit einem unter Wirkung einer Oxydoreduktase, insbesondere einer Laccase, erfolgten Aufbrechen oberflächennaher Amidbindungen der Aramidfasern generiert ist.

7.  Verstärkungsmaterial nach Anspruch 6, bei dem ein Trennmechanismus zum Aufbrechen der Amidbindungen einen zyklisch zwischen wenigstens zwei unterschiedlichen eingenommenen Zuständen wechselnden Aufbrecher aufweist, wobei diese zyklische Zustandsänderung in einem Teilzyklus von der Oxydoreduktase angetrieben wird, der Aufbrecher in einem anderen Teilzyklus jeweils nahe einer Amidbindung und/oder eines $C_6$-Ringes oxidativ mit den Aramidfasern wechselwirkt und wenigstens ein Teil der Andockstellen aus den so aufgebrochenen Amidbindungen generiert ist.

8. Verstärkungsmaterial nach einem der vorhergehenden Ansprüche mit einer Beschichtung, welche insbesondere eine Gummimatrix beinhaltet, in die eine die Aramidfasern enthaltende Faserstruktur eingebettet ist, wobei das beschichtete Verstärkungsmaterial insbesondere Reifencord ist.

9. Verstärkungsmaterial nach Anspruch 8, mit einem gemäß ASTM D4393 bestimmten Pull von wenigstens 92 N/cm, insbesondere wenigstens 96 N/cm, sogar wenigstens 100 N/cm.

10. Verstärkungsmaterial nach einem der vorhergehenden Ansprüche, mit weiteren Faserbestandteilen aus Nicht-Aramidfasern.

11. Verwendung eines Verstärkungsmaterials nach einem der vorhergehenden Ansprüche für die Armierung von Gummiprodukten, insbesondere als Karkassen- und Gürtelbandagenmaterial oder für Förderbänder oder Schläuche.

12. Gummiprodukt, insbesondere Reifen, verstärkt durch ein Verstärkungsmaterial nach einem der Ansprüche 1 bis 10.

13. Verfahren zur Vorbereitung einer Aramidfasern enthaltenden Struktur für deren Ankopplung an insbesondere eine Gummimatrix, wobei die Fasern lineare Anordnungen mit wenigstens zum Teil aromatischen Segmenten aufweisen, die jeweils über Amidbindungen miteinander verbunden sind,
**dadurch gekennzeichnet, dass** Amidbindungen an der Oberfläche der Fasern durch einen eine Oxydoreduktase, insbesondere Laccase aufweisenden Trennmechanismus aufgebrochen werden und dass aus den so aufgebrochenen Amidbindungen Andockstellen für die Ankopplung insbesondere der Gummimatrix gebildet werden.

14. Verfahren nach Anspruch 13, bei dem der Trennmechanismus einen zyklisch zwischen wenigstens zwei unterschiedlichen eingenommenen Zuständen wechselnden Aufbrecher aufweist, wobei diese zyklische Zustandsänderung in einem Teilzyklus von der Oxydoreduktase angetrieben wird und wobei der Aufbrecher in einem anderen Teilzyklus jeweils die Faser nahe einer Amidbindung und/oder eines $C_6$-Ringes oxidiert.

15. Verfahren nach Anspruch 14, bei dem der Aufbrecher aus einem oder mehreren der in der Gruppe HBT, VLA und TEMPO enthaltenden Substanzen gebildet ist.

16. Verfahren nach einem der Ansprüche 13 bis 15, bei dem der Trennmechanismus in Abwesenheit von Proteasen erfolgt.

**Claims**

1. A textile reinforcement material for reinforcing in particular rubber products, having at least one multi-fibre, which has aramid fibres having docking sites in the form of carboxyl groups arranged on the surface thereof for coupling in particular a rubber material,
**characterized by** an areal density of the docking sites of at least 0.2 nmol/mm$^2$ and a tensile strength of the multi-fibre of at least 600 MPa as defined in the description.

2. Reinforcement material according to claim 1, **characterized in that** the areal density of the docking sites is at least 0.4 nmol/mm$^2$, in particular at least 0.6 nmol/mm$^2$.

3. Reinforcement material according to claim 1 or 2, **characterized in that** the areal density of the docking sites is at the most 2.4 nmol/mm$^2$, in particular at the most 2.0 nmol/mm$^2$, even at the most 1.6 nmol/mm$^2$.

4. Reinforcement material according to any of the preceding claims, **characterized in that** the tensile strength of the aramid fibres is at least 800 MPa, preferably at least 1000 MPa, in particular at least 1200 MPa.

5. Reinforcement material according to any of the preceding claims having a water drop absorption time, determined according to the WCA test, of less than 1.6 s, in particular less than 1.2 s, even less than 0.8 s.

**6.** Reinforcement material according to any of the preceding claims, wherein in particular a majority of the docking sites is generated by a surface treatment resulting in a cleavage of amide bonds of the aramid fibres, which are near to the surface, by way of an oxidoreductase, in particular a laccase.

**7.** Reinforcement material according to claim 6, wherein a separating mechanism for disrupting the amide bonds has a disrupting agent alternating cyclically between at least two different adopted states, wherein this cyclic change of state is driven by the oxidoreductase in a partial cycle, the disrupting agent interacts oxidatively with the aramid fibres in another partial cycle respectively near an amide bond and/or a $C_6$ ring and wherein at least a part of the docking sites is generated from the amide bonds thus disrupted.

**8.** Reinforcement material according to any of the preceding claims having a coating, which comprises in particular a rubber matrix, in which there is embedded a fibre structure containing the aramid fibres, wherein the coated reinforcement material is in particular tyre cord.

**9.** Reinforcement material according to claim 8 having a pull of at least 92 N/cm, determined according to ASTM D4393, in particular at least 96 N/cm, or even at last 100 N/cm.

**10.** Reinforcement material according to any of the preceding claims having further fibre components made from non-aramid fibres.

**11.** Use of a reinforcement material according to any of the preceding claims for the reinforcement of rubber products, in particular as a carcass and belt bandage material or for conveyor belts or hoses.

**12.** A rubber product, in particular tyres, reinforced by a reinforcement material according to any of claims 1 to 10.

**13.** A method for preparing a structure containing aramid fibres for the coupling thereof to in particular a rubber matrix, wherein the fibres have linear arrangements with at least in part aromatic segments, which are respectively connected to one another via amide bonds,
**characterized in that** at the surface of the fibres amide bonds are disrupted by a disruption mechanism including an oxidoreductase, in particular laccase, and thus, docking sites for the coupling of in particular the rubber matrix are generated from the disrupted amide bonds.

**14.** Method according to claim 13, wherein the disconnecting mechanism has a disrupting agent cyclically alternating between at least two different adopted states, wherein this cyclic change of state is driven by the oxidoreductase in a partial cycle and wherein in another partial cycle, respectively, the disrupting agent oxidizes the fibre near an amide bond and/or a $C_6$ ring.

**15.** Method according to claim 14, wherein the disrupting agent is formed from one or several of substances contained in the group of HBT, VLA and TEMPO.

**16.** Method according to any of claims 13 to 15, wherein the disruption mechanism is realized in the absence of proteases.

**Revendications**

**1.** Renfort textile pour renforcer en particulier des produits en caoutchouc, avec au moins une multifibre qui présente des fibres d'aramide avec des points d'attache sous forme de groupes carboxyles disposés à sa surface pour l'accouplement en particulier d'une matière caoutchouteuse,
**caractérisé par** une densité surfacique des points d'attache d'au moins 0,2 nmol/mm$^2$ et une résistance de la multifibre d'au moins 600 MPa, comme défini dans la description.

**2.** Renfort selon la revendication 1, **caractérisé en ce que** la densité surfacique des points d'attache est d'au moins 0,4 nmol/mm$^2$, en particulier d'au moins 0,6 nmol/mm$^2$.

**3.** Renfort selon la revendication 1 ou 2, **caractérisé en ce que** la densité surfacique des points d'attache est au maximum de 2,4 nmol/mm$^2$, en particulier au maximum de 2,0 nmol/mm$^2$, voire au maximum de 1,6 nmol/mm$^2$.

**4.** Renfort selon une des revendications précédentes, **caractérisé en ce que** la résistance des fibres d'aramide est d'au moins 800 MPa, de préférence d'au moins 1000 MPa, en particulier d'au moins 1200 MPa$^2$.

5. Renfort selon une des revendications précédentes, avec un temps d'absorption des gouttes d'eau, déterminé selon la méthode de test WCA, de moins de 1,6 s, en particulier de moins de 1,2 s, voire de moins de 0,8 s.

6. Renfort textile selon une des revendications précédentes, dans lequel une partie particulièrement majoritaire des points d'attache est générée par un traitement superficiel, avec une rupture des liaisons amides proches de la surface des fibres amides provoquée par l'action d'une oxydoréductase, en particulier d'une laccase.

7. Renfort selon la revendication 6, dans lequel un mécanisme de séparation pour la rupture des liaisons amides présente un dispositif de rupture alternant de façon cyclique entre au moins deux états différents, ce changement d'état cyclique étant opéré dans un cycle partiel de l'oxydoréductase, le dispositif de rupture interagissant dans un autre cycle partiel à proximité d'une liaison amide et/ou d'un cycle $C_6$ de façon oxydative avec les fibres aramides et au moins une partie des points d'attache étant générée par les liaisons amides ainsi rompues.

8. Renfort selon une des revendications précédentes avec un revêtement, qui contient en particulier une matrice caoutchouteuse dans laquelle une structure fibreuse contenant les fibres aramides est intégrée, le renfort revêtu étant en particulier une nappe tramée pour pneumatiques.

9. Renfort selon la revendication 8, avec une résistance à la traction déterminée selon ASTM D4393 d'au moins 92 N/cm, en particulier d'au moins 96 N/cm, voire d'au moins 100 N/cm.

10. Renfort selon une des revendications précédentes avec un revêtement, avec d'autres composants fibreux faits de fibres non aramides.

11. Utilisation d'un renfort selon une des revendications précédentes pour le renforcement de produits caoutchouteux, en particulier sous la forme de matériau de carcasse ou de bandage de ceinture, ou pour des bandes transporteuses ou des tuyaux.

12. Produit caoutchouteux, en particulier pneumatique, renforcé par un renfort selon une des revendications 1 à 10.

13. Procédé pour la préparation d'une structure contenant des fibres aramides pour leur accouplement avec en particulier une matrice caoutchouteuse, selon lequel les fibres présentent des dispositions linéaires avec au moins en partie des segments aromatiques qui sont liés entre eux par des liaisons amides,
**caractérisé en ce que** des liaisons amides à la surface des fibres sont rompues par un mécanisme de séparation comprenant une oxydoréductase, en particulier une laccase, et qu'à partir des liaisons amides ainsi rompues, des points d'attache sont formés pour l'accouplement en particulier de la matrice caoutchouteuse.

14. Procédé selon la revendication 13, selon lequel le mécanisme de séparation présente un dispositif de rupture alternant de façon cyclique entre au moins deux états différents, ce changement d'état cyclique étant opéré dans un cycle partiel de l'oxydoréductase et le dispositif de rupture oxydant dans un autre cycle partiel les fibres à proximité d'une liaison amide et/ou d'un cycle $C_6$.

15. Procédé selon la revendication 14, selon lequel le dispositif de rupture est constitué par une ou plusieurs des substances contenues dans les groupes HBT, VLA et TEMPO.

16. Procédé selon une des revendications 13 à 15, selon lequel le mécanisme de séparation agit en l'absence de protéases.

A

B

C

D

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 1583857 A
- DE 3485967 T2
- WO 2005121438 A2
- WO 20100116041 A
- JP 2003128836 A
- WO 2005121438 A

**In der Beschreibung aufgeführte Nicht-Patentliteratur**

- **BRYAN CROWTHER.** Handbook of Rubber Bonding. Rubber Technology Ltd, 2003, 246
- **S. ROEDIGER et al.** *Anal. Chem.,* 2011, vol. 83, 3379-3385
- **E. ALMANSA et al.** *Biocatalytics and Biotransformation,* Januar 2004, vol. 22 (5-6), 315-324